# EUROPEAN PATENT APPLICATION

(11) **EP 1 998 151 A1**
(43) Date of publication of application: **03.12.2008**
(21) Application number: 07708302.0
(22) Date of filing: 09.02.2007
(51) Int. Cl.: G01G 19/44

(54) **WEIGHING MACHINE**

(30) Priority: 16.03.2006 JP 2006072539
(71) Applicant: Omron Healthcare Co., Ltd., Kyoto 615-0084 (JP)
(72) Inventor: KUBO, Nobuo, Ukyo-ku, Kyoto-shi, Kyoto 615-0084 (JP)
(74) Representative: Wilhelms · Kilian & Partner Patentanwälte
(86) International application number: PCT/JP2007/052366
(87) International publication number: WO 2007/108250

(57) **Abstract**

An object of the present invention is to provide a weighing machine which can realize high-accuracy measurement even if a plurality of sensors having variations in output characteristics are used. The weighing machine includes a plurality of sensors, each of which supplies a signal according to a load; a storage unit in which an output characteristic of each sensor is previously stored; and a processing unit which performs processing of the signal supplied from the sensor according to the output characteristic stored in the storage unit.

## Description

### TECHNICAL FIELD

The present invention relates to a weighing machine including a plurality of sensors.

### BACKGROUND ART

Conventionally, there is known a weighing machine in which a plurality of sensors are used to obtain a weighing value as an integrated value of sensor outputs (see Patent Documents 1, 2, and 5).
Patent Document 1: Japanese Patent Laid-Open No. 2-163617
Patent Document 2: Japanese Patent Laid-Open No. 2-238327
Patent Document 3: Japanese Patent Laid-Open No. 2-253130
Patent Document 4: Japanese Patent Laid-Open No. 2-259429
Patent Document 5: Japanese Patent Laid-Open No. 3-172720

### DISCLOSURE OF THE INVENTION

### PROBLEMS TO BE SOLVED BY THE INVENTION

Unevenness of characteristics of the plurality of sensors used in the weighing machine causes a problem in that an error is generated when a user disproportionately gets on the weighing machine. When the user incorrectly gets on the weighing machine, the weighing machine cannot display a correct value. Therefore, conventionally, it is necessary to use the sensors by selecting the sensors having the similar characteristics in production. However, the selection becomes troublesome, which causes a decrease in production yield and an increase in cost.

An object of the invention is to provide a weighing machine which can realize high-accuracy measurement even if a plurality of sensors having variations in output characteristics are used.

### MEANS FOR SOLVING THE PROBLEMS

In order to achieve the object, a weighing machine according to an aspect of the invention includes a plurality of sensors, each of which supplies a signal according to a load; a storage unit in which an output characteristic of each sensor is previously stored; and a processing unit which performs processing of the signal supplied from the sensor according to the output characteristic stored in the storage unit.

### EFFECT OF THE INVENTION

According to the invention, the high-accuracy measurement can be realized even if the plurality of sensors having the variations in output characteristics are used.

### BRIEF DESCRIPTION OF THE DRAWINGS

Fig. 1 is a block diagram showing a circuit configuration of a weighing machine according to an embodiment of the invention.
Fig. 2A is a view showing an output characteristic of a sensor used in the weighing machine of the embodiment.
Fig. 2B is a view showing an output characteristic of a sensor used in the weighing machine of the embodiment.
Fig. 2C is a view showing an output characteristic of a sensor used in the weighing machine of the embodiment.
Fig. 2D is a view showing an output characteristic of a sensor used in the weighing machine of the embodiment.
Fig. 3 is a flowchart showing a procedure of storing output characteristics of sensors 1 to 4 in a memory 12.
Fig. 4 is a flowchart showing a procedure of obtaining a load value from a signal supplied from a sensor according to an output characteristic.

### EXPLANATIONS OF SYMBOLS

- 10: Weighing machine
- 12: Memory
- 14: Operation unit
- 16: Control unit
- 18: Display unit
- 20: Power supply

### BEST MODE FOR CARRYING OUT THE INVENTION

An exemplary embodiment of the invention will be described in detail below with reference to the drawings. However, a technical scope of the invention is not limited to a size, a material, a shape, and a relative layout of a component described in the embodiment unless otherwise stated.

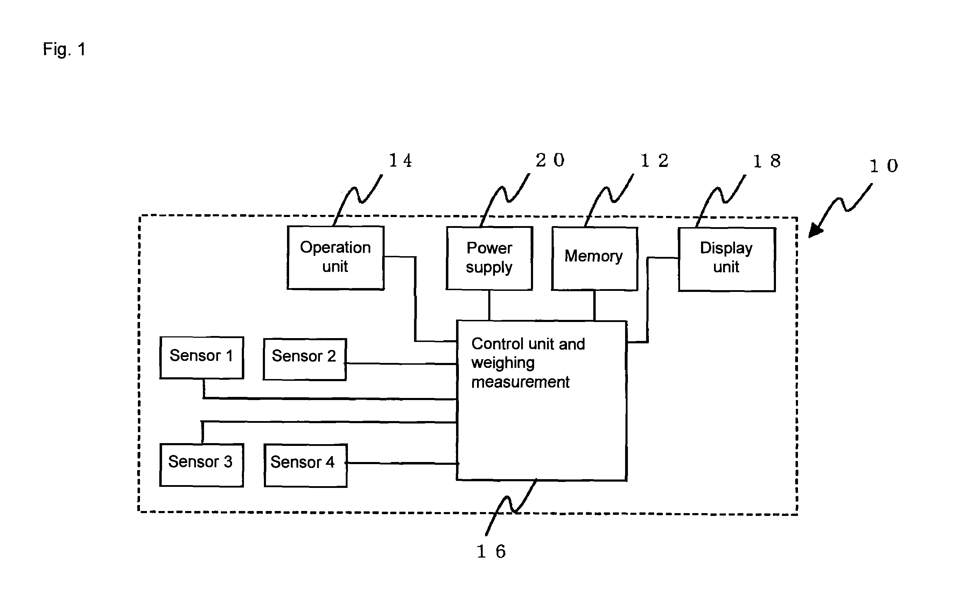

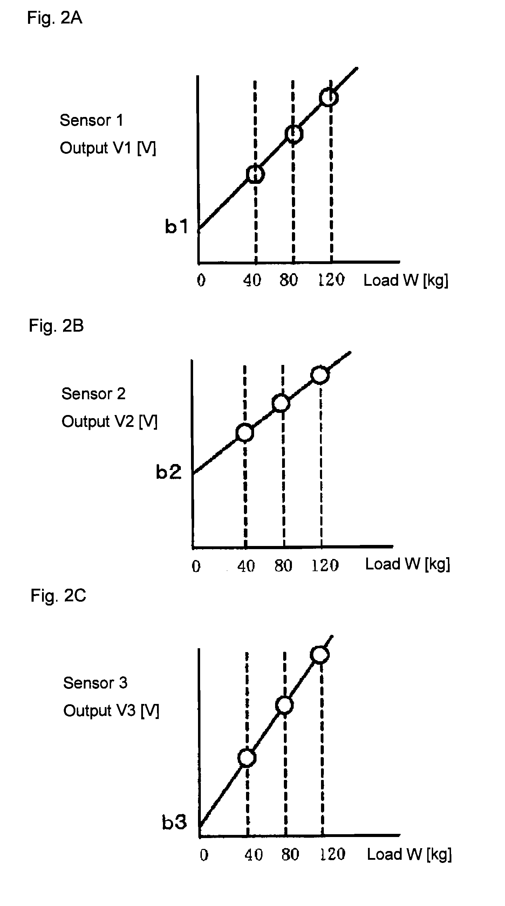

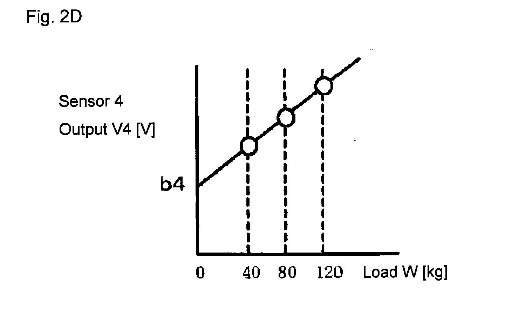

A weighing machine according to an embodiment of the invention will be described with reference to Figs. 1 and 2A to 2D. Fig. 1 is a block diagram showing a circuit configuration of the weighing machine of the embodiment. Figs. 2A to 2D are views showing an output characteristic of a sensor used in the weighing machine of the embodiment.

As shown in Fig. 1, a weighing machine 10 of the embodiment includes sensors 1 to 4, a memory 12 in which output characteristics of sensors 1 to 4 are stored, an operation unit 14 which is used to provide an instruction such as measurement start, a control unit 16 which performs various kinds of control and computation, a display unit 18 which displays a measurement result, and a power supply 20.

### (1. Sensor)

Each of the plurality of sensors 1 to 4 supplies a signal (voltage) according to a load. A load cell which converts a load into a signal to supply the signal can be used as the sensor. As shown in Figs. 2A to 2D, the sensors 1 to 4 of the embodiment have different output characteristics (Load-Voltage Characteristics). Conventionally, it is necessary that plurality of sensors located near the output characteristics of, for example, the sensor 1 be selected and used. This is because the outputs (voltages) of the sensors are simply integrated and used as the weighing value. On the other hand, for the sensors 1 to 4 of the embodiment, as described later, it is not necessary that the output characteristics be uniformed by selecting work.

### (1.2 Sensor Output Characteristic)

The output characteristics of the sensors are stored in the memory 12 after the weighing machine 10 shown in Fig. 1 is assembled. The sensors 1 to 4 are disposed under a stage which the user gets on such that the load is evenly dispersed. Therefore, initial outputs b (V) are supplied from the sensors as shown in Figs. 2A to 2D. An actually measured value may be used as the initial output b, or the initial output b may be obtained from computation as described below. Figs. 2A to 2D show the output characteristics of the sensors 1 to 4 when a predetermined load is evenly applied to the weighing machine 10 while the weighing machine 10 is assembled. The output characteristic of the embodiment shows a model output characteristic which is estimated from the output of each sensor when three loads are applied. In the embodiment, a coefficient a and an intercept b are obtained when an equation (for example: V = a x W [kg] + b [V]) is derived from the output characteristic.

### (2. Output Characteristic Storage)

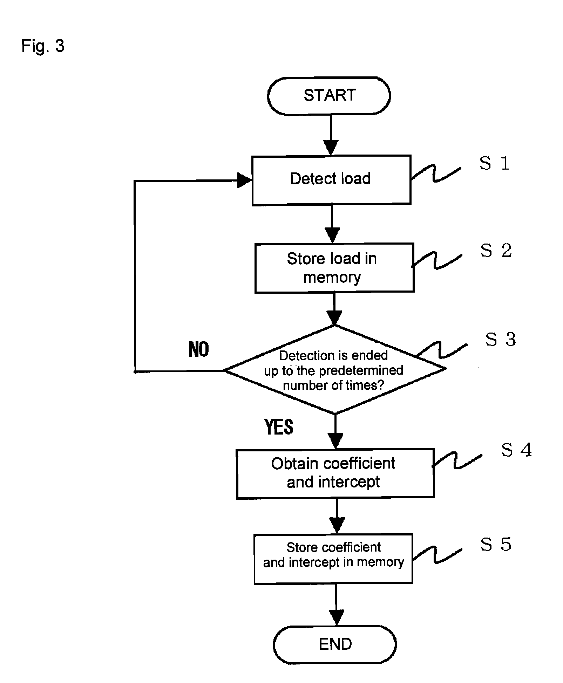

Fig. 3 is a flowchart showing a procedure of storing the output characteristics of sensors 1 to 4 in the memory 12. The control unit 16 stores the output (voltage value) of each sensor in the memory 12 when a first load (for example, 40 kg) is evenly applied to the weighing machine 10 (S1 and S2). Then, the control unit 16 stores the output of each sensor in the memory 12 when a second load (for example, 80 kg) is evenly applied to the weighing machine 10 (S1 and S2). Then, the control unit 16 stores the output of each sensor in the memory 12 when a third load (for example, 120 kg) is evenly applied to the weighing machine 10 (S1 and S2). When the measurement is ended up to the predetermined number of times (S3), the control unit 16 computes the coefficient a and the intercept b from the plurality of load values in each sensor by a least squares method, and the control unit 16 stores the coefficient a and the intercept b in the memory 12 (S4 and S5).

### (3. Memory 12)

As described above, the output characteristic of each sensor is previously stored in the memory 12 (corresponding to "storage unit" of the invention). Values of a coefficient a1 and the intercept b1 of the sensor 1 are stored in the memory 12. Values of a coefficient a2 and the intercept b2 of the sensor 2 are stored in the memory 12. Values of a coefficient a3 and the intercept b3 of the sensor 3 are stored in the memory 12. Values of a coefficient a4 and the intercept b4 of the sensor 4 are stored in the memory 12. A relationship between the coefficient a and intercept b stored in the memory 12 and the output V and load W of the sensor is expressed by the following equation.

Where the coefficients a1, a2, a3, and a4 and the initial outputs b1, b2, b3, and b4 are constants. Therefore, a constant load value (kg) is determined for the signal (V) supplied from the sensor.

### (4. Control Unit 16)

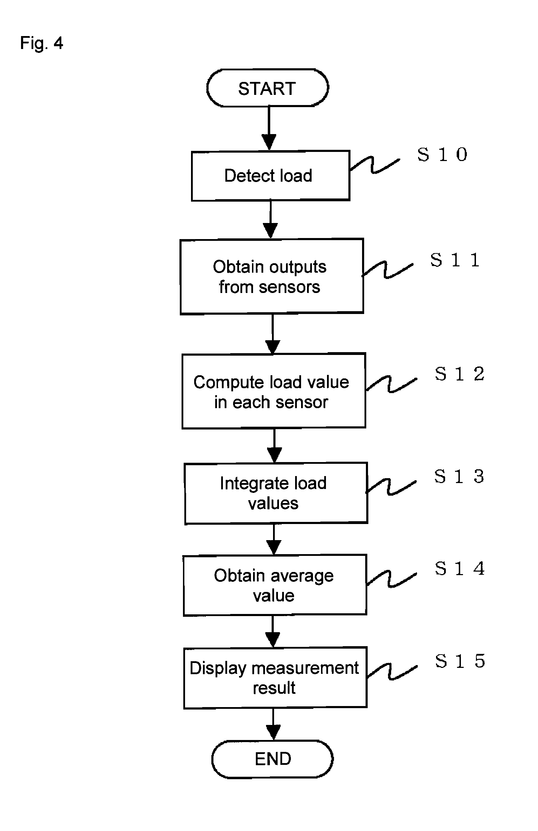

The control unit 16 (corresponding to "processing unit" of the invention) performs processing of the signal supplied from the sensor according to the output characteristic stored in the memory 12. Fig. 4 is a flowchart showing a procedure of obtaining the load value from the signal supplied from the sensor according to the output characteristic.

A user presses a measurement button of the operation unit 14 to start the weighing measurement (START). The control unit 16 detects the initial outputs of the sensors 1 to 4. Then, the control unit 16 detects that a load is applied when the outputs of the sensors 1 to 4 are changed (S10). When the output of each sensor is stabilized, the control unit 16 obtains the output of each sensor as the measured value (S11). Then, using the output characteristics of the sensor 1 to 4 stored in the memory 12, the control unit 16 computes the load value in each sensor on the basis of the measured value (S12). For example, it is assumed that the load values obtained by the sensors are 50.50 kg (sensor 1), 49.4 kg (sensor 2), 50.3 kg (sensor 3), and 49.6kg (sensor 4). The control unit 16 integrates the load values (S13). The integrated value of 199.8 kg is obtained. Then, the control unit 16 obtains an average value of the integrated value (S14). The average value of 49.95 kg is obtained. The control unit 16 causes the display unit 18 to display the measurement result (average value) (S15).

Thus, the load value is obtained in consideration of the output characteristic of each sensor, so that the high-accuracy measurement can be realized even if the plurality of sensors having the variations in output characteristics are used. Additionally, because the load value is obtained in consideration of the output characteristic of each sensor, it is not necessary that the sensors are selected while the output characteristics of the sensors are uniformed. Therefore, the cost necessary for the selection can be eliminated.

### (Modification)

Although the load value is obtained with the linear equation in the embodiment, the invention is not limited to the embodiment. For example, the load value may be obtained with a quadratic equation or a cubic equation.

## Claims

1. A weighing machine comprising:
a plurality of sensors, each of which supplies a signal according to a load;
a storage unit in which an output characteristic of each sensor is previously stored; and
a processing unit which performs processing of the signal supplied from the sensor according to the output characteristic stored in the storage unit.

2. The weighing machine according to claim 1, wherein the processing unit obtains a load value according to the signal supplied from each of the plurality of sensors using the output characteristic stored in the storage unit.
